# DEMANDE DE BREVET EUROPEEN

(11) **EP 0 866 312 A1**
(43) Date de publication de la demande: **23.09.1998**
(21) Numéro de dépôt: 98400539.7
(22) Date de dépôt: 06.03.1998
(51) Int. Cl.: G01D 5/20

(54) **Capteur de position angulaire et ses applications**

(30) Priorité: 18.03.1997 FR 9703298
(71) Demandeur: Mecagis, 92800 Puteaux (FR)
(72) Inventeur: Berna, Michel, 03230 Lusigny (FR); Deon, Roger, 10440 Torvilliers (FR)
(74) Mandataire: Bouget, Lucien

(57) **Abrégé**

Le dispositif comporte un premier noyau (5) en matériau magnétique doux comprenant deux portions d'anneau ayant des extrémités placées en vis-à-vis, sur lequel sont enroulés des bobinages primaire et secondaire (7, 10) de manière à constituer un circuit magnétique annulaire ayant deux entrefers et un second noyau magnétique (3) en matériau magnétique doux monté mobile et entraîné en rotation par l'organe mobile dont on mesure la position, autour de l'axe de révolution du circuit magnétique (2). Le bobinage primaire (7) est constitué de deux enroulements (7a, 7b) entourant chacun une partie du premier noyau magnétique (5) au voisinage de l'un des entrefers. Le bobinage primaire est alimenté par un courant électrique variable. On recueille et on traite un signal de sortie aux bornes du bobinage secondaire (10) enroulé sur une partie du premier noyau magnétique (5) de manière symétrique par rapport à un plan de symétrie (8) du circuit magnétique.

## Description

L'invention concerne un dispositif de mesure électromagnétique de la position angulaire d'un organe mobile en rotation et les applications de ce dispositif.

Certains équipements ou machines comportent des organes mobiles en rotation dont il est nécessaire de connaître de manière très précise la position angulaire à un instant quelconque pendant le fonctionnement de l'équipement ou de la machine.

Par exemple, les véhicules automobiles comportent des éléments mobiles en rotation dont il est nécessaire de connaître la position à chaque instant, par exemple pour régler le fonctionnement du moteur d'entraînement du véhicule ou d'un équipement de ce véhicule.

Dans le cas des véhicules automobiles équipés d'un moteur à injection électronique, il est nécessaire de déterminer la position angulaire d'ouverture du volet de charge disposé dans une tubulure d'admission du moteur.

Les véhicules automobiles à propulsion par moteur électrique comportent une pédale de commande de la puissance du moteur qui est rappelée par un ressort et qui est actionnée par le conducteur, pendant la marche du véhicule. La position angulaire de la pédale détermine l'émission d'un signal de puissance qui est fourni au moteur électrique. Dans ce cas également il est nécessaire de pouvoir mesurer précisément la position de la pédale pour émettre le signal de puissance voulu.

Dans le cas des véhicules comportant une suspension réglable dynamique, le mouvement linéaire de la suspension peut être transformé en un mouvement rotatif d'un organe permettant d'effectuer la mesure du mouvement linéaire à partir de la mesure de la position angulaire de l'organe mobile.

Les dispositifs de mesure de la position angulaire d'un organe mobile utilisés dans le cadre de la construction automobile sont essentiellement constitués par les dispositifs des types suivants :
- les potentiomètres rotatifs qui présentent l'inconvénient de nécessiter un contact électrique glissant qui est un point de faiblesse du dispositif,
- les capteurs comportant des cellules magnéto-résistives ou à effet Hall associées à un aimant qui sont des dispositifs complexes et relativement coûteux,
- les capteurs électromagnétiques comportant au moins deux éléments mobiles en rotation l'un par rapport à l'autre, chacun des éléments étant équipé de bobinages, ce qui nécessite d'utiliser des connexions électriques sur des pièces mobiles en rotation.

Par exemple, le FR-A-91-06815 est relatif à un dispositif de mesure de la position angulaire d'un volet de charge d'un moteur à injection électronique monté mobile en rotation dans une tubulure d'admission de gaz dans le moteur. Le dispositif de mesure comprend un inducteur électromagnétique alimenté par un signal variable et un induit électromagnétique, mobiles en rotation l'un par rapport à l'autre en fonction de la position du volet de charge du moteur. Le coefficient de couplage électromagnétique de l'inducteur et de l'induit dépend de la position relative de ces deux éléments, de sorte que la tension induite par l'inducteur dans l'induit dépend de la position angulaire du volet de charge. Des moyens de traitement sont reliés à l'induit de manière à récupérer et à traiter le signal de sortie pour déterminer la position angulaire du volet de charge. Dans ce dispositif, généralement, l'inducteur est mobile en rotation, si bien que le dispositif nécessite de réaliser une connexion électrique entre des moyens d'alimentation de l'inducteur et l'inducteur tournant.

On connaît également des capteurs électromagnétiques assurant un couplage entre deux axes qui comportent au moins deux éléments électromagnétiques dont l'un constitue un inducteur et l'autre un induit. L'un des éléments électromagnétiques peut être réalisé sous la forme d'un circuit magnétique annulaire en une seule ou en plusieurs parties comportant un noyau magnétique sur lequel sont engagés ou enroulés des bobinages. Le second élément électromagnétique est constitué sous la forme d'un noyau magnétique sur lequel sont enroulés des bobinages disposé à l'intérieur du circuit magnétique de forme annulaire, de telle manière que le circuit magnétique annulaire et le noyau magnétique équipé de bobinages soient montés rotatifs l'un par rapport à l'autre. De tels dispositifs, qui sont décrits par exemple dans les brevets US-A-2.507.763 et 3.302.099, ne sont pas utilisés pour effectuer la mesure précise de la position angulaire d'un organe mobile en rotation et nécessitent l'utilisation de connexions électriques avec au moins une pièce mobile en rotation.

Le but de l'invention est donc de proposer un dispositif de mesure de la position angulaire d'un organe mobile en rotation, comportant un premier et un second éléments électromagnétiques mobiles en rotation l'un par rapport à l'autre en fonction de la rotation de l'organe mobile, le couplage électromagnétique des deux éléments étant variable en fonction de leur position relative et des moyens de traitement d'un signal de sortie de l'un des éléments électromagnétiques permettant de déterminer la position angulaire de l'organe mobile en rotation, ce dispositif permettant d'effectuer des mesures précises tout en étant d'une forme de réalisation simple et peu coûteuse et ne nécessitant pas l'utilisation de connexion électrique avec des pièces mobiles.

Dans ce but, le premier élément électromagnétique comporte :
- un premier noyau en matériau magnétique doux comprenant deux portions d'anneau ayant des extrémités placées en vis-à-vis pour constituer un circuit magnétique annulaire ayant deux entrefers et un plan de symétrie passant par l'axe de révolution du circuit annulaire,
- un bobinage primaire constitué de deux enroulements entourant chacun une partie du premier noyau magnétique au voisinage de l'un des entrefers et disposés symétriquement par rapport au plan de symétrie du circuit magnétique,
- un moyen d'alimentation du bobinage primaire en courant électrique variable, de manière que les deux enroulements du bobinage primaire soient parcourus par des courants ayant des sens de circulation opposés, et
- un bobinage secondaire enroulé sur une partie au moins du premier noyau magnétique, de manière symétrique par rapport au plan de symétrie du circuit magnétique, les moyens de traitement du signal de sortie étant reliés aux bornes du bobinage secondaire.

Le second élément électromagnétique est un second noyau en matériau magnétique doux ayant au moins deux extrémités polaires, monté mobile et entraîné en rotation par l'organe mobile dont on mesure la position, autour de l'axe de révolution du circuit magnétique annulaire, de manière que les extrémités polaires du second noyau se déplacent en vis-à-vis d'une surface du circuit annulaire.

Afin de bien faire comprendre l'invention, on va maintenant décrire, à titre d'exemples non limitatifs, plusieurs modes de réalisation d'un dispositif de mesure suivant l'invention.

La figure 1 est une vue schématique en plan d'un dispositif de mesure de position angulaire suivant l'invention.

La figure 2 est une vue en plan du premier et du second noyaux magnétiques du dispositif et de la circulation des lignes de flux dans les noyaux magnétiques, pendant le fonctionnement du dispositif.

La figure 3 est un diagramme représentant les variations de la tension mesurée aux bornes du bobinage secondaire du dispositif, en fonction de la position angulaire du second noyau magnétique à l'intérieur du circuit magnétique annulaire.

La figure 4 est une vue schématique analogue à la vue de la figure 1 montrant une première variante de réalisation du dispositif.

La figure 5 est une vue schématique analogue aux vues des figures 1 et 4, d'une seconde variante de réalisation du dispositif.

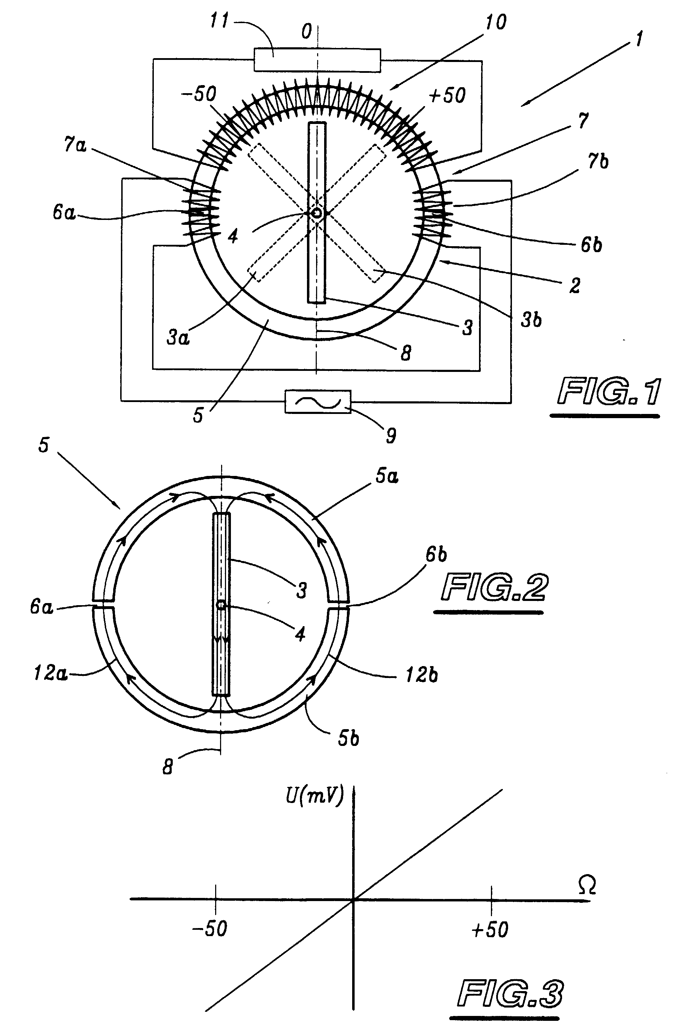

Sur la figure 1, on voit un dispositif de mesure électromagnétique de la position angulaire d'un organe mobile réalisé suivant l'invention et désigné de manière générale par le repère 1.

Le dispositif de mesure 1 peut être utilisé par exemple pour déterminer la position angulaire d'un volet de charge d'un moteur d'un véhicule automobile à injection électronique.

Le dispositif de mesure 1 comporte un circuit magnétique 2 de forme annulaire et un noyau magnétique 3 qui peut présenter la forme d'un bâtonnet ou d'une portion de fil à section circulaire qui est monté mobile en rotation, par l'intermédiaire d'un arbre 4 disposé suivant l'axe de révolution du circuit magnétique 2, à l'intérieur du circuit magnétique 2. L'arbre 4 constitue un élément de liaison entre le noyau magnétique mobile 3 et l'organe mobile en rotation dont on mesure la position angulaire de telle sorte que le noyau magnétique mobile 3 puisse se déplacer en rotation à l'intérieur du circuit magnétique 2, entre deux positions extrêmes de mesure 3a et 3b.

Comme il est visible en particulier sur la figure 2, le circuit magnétique 2 comporte un noyau magnétique 5 en deux parties 5a et 5b constituées par des demi-anneaux ayant des parties d'extrémité qui sont placées en vis-à-vis, avec un certain écartement, de manière que le noyau magnétique 5 ou premier noyau magnétique et le circuit magnétique 2 présentent une forme générale annulaire et deux entrefers 6a et 6b qui peuvent être placés, par exemple, comme représenté, de part et d'autre d'un même plan passant par l'axe de révolution du noyau magnétique 5 et du circuit magnétique 2.

D'autres dispositions des entrefers sont possibles, dans le cas où les deux parties 5a et 5b du premier noyau magnétique 5 sont constituées par des portions d'anneaux complémentaires qui ne sont pas des demi-anneaux.

Le circuit magnétique 2 comporte un bobinage primaire 7 constitué d'un premier enroulement 7a disposé autour d'une partie du noyau magnétique 5 comprenant l'entrefer 6a et un second enroulement 7b disposé autour d'une partie du noyau magnétique 5 comprenant le second entrefer 6b.

Dans le mode de réalisation représenté sur la figure 1, les enroulements 7a et 7b du bobinage primaire 7 sont disposés de manière symétrique autour des entrefers 6a et 6b situés au centre de l'enroulement correspondant 7a ou 7b. Les enroulements 7a et 7b du bobinage primaire 7 pourraient être disposés différemment par rapport aux entrefers 6a et 6b. Toutefois, il est nécessaire que les enroulements 7a et 7b soient placés de manière symétrique par rapport à un plan passant par l'axe de révolution du circuit magnétique 2 et du noyau 5 ayant pour trace l'axe 8 sur la figure 1, ce plan constituant un plan de symétrie pour l'ensemble du circuit magnétique 2.

Les enroulements 7a et 7b du bobinage primaire 7 sont reliés entre eux, à l'une de leurs extrémités, par un conducteur électrique et, par leurs extrémités opposées, à une source 9 de courant alternatif à haute fréquence, de telle sorte que les enroulements 7a et 7b soient parcourus par des courants circulant en sens inverse. De préférence, la fréquence du courant alternatif fourni par la source 9 est comprise entre un et plusieurs kHz.

Le circuit magnétique 2 comporte de plus un bobinage secondaire 10 qui est enroulé sur une partie du noyau magnétique 5, de manière symétrique par rapport au plan de symétrie 8 du circuit magnétique 2. Les bornes du bobinage secondaire 10 sont reliées à une unité 11 de traitement du signal fourni par le bobinage secondaire constituant l'induit du dispositif de mesure, lorsque le bobinage primaire constituant l'inducteur du dispositif est alimenté en courant alternatif.

Comme il est visible sur la figure 2, sur laquelle le second noyau magnétique 3 a été représenté dans une position de référence dans laquelle l'axe longitudinal du noyau magnétique 3 se trouve dans le plan de symétrie 8 du circuit magnétique 2, lorsque le bobinage primaire 7 est alimenté en courant électrique, un flux magnétique circule à travers le circuit magnétique 2 et le noyau magnétique 3, en traversant les entrefers 6a et 6b, de la manière représentée par les lignes de flux 12a et 12b. Les flux magnétiques engendrent dans l'enroulement secondaire 10 un courant induit et l'unité de traitement 11 reçoit un signal représentatif de la tension aux bornes du bobinage 10 de l'induit.

La circulation du flux magnétique dans le circuit magnétique annulaire 2 et dans le noyau magnétique 3 dépend de la position angulaire du second noyau magnétique 3 monté mobile en rotation autour de l'axe 4.

Dans la position de référence, ou position zéro, dans laquelle le second noyau magnétique 3 est disposé suivant le plan de symétrie 8 du circuit magnétique, les flux magnétiques traversant le bobinage induit 10 s'annulent et l'unité de traitement 11 enregistre un signal de tension nul. On repère ainsi la position de référence du second noyau magnétique 3 et de l'organe mobile en rotation qui est relié par l'axe 4 au second noyau magnétique 3.

L'arc d'enroulement du bobinage secondaire 10 sur le premier noyau magnétique 5 permet de définir une échelle de mesure de part et d'autre de la position de référence zéro.

Comme il est visible sur la figure 1, dans le cas d'un volet de charge d'un moteur à injection électronique, on utilise un enroulement induit permettant d'obtenir une plage de mesure de 50° de part et d'autre de la position de référence (plage de mesure de -50° à +50°).

Comme il est visible sur la figure 3, du fait que le bobinage induit 10 est réparti de manière régulière sur le noyau magnétique 5 de part et d'autre de la position de référence, la caractéristique donnant la tension U (en mV) en fonction de la position angulaire Ω du second noyau magnétique 3 ou de l'organe dont on mesure la position angulaire (en degrés) est une droite sur toute la plage de mesure de -50° à +50°.

Le signal de sortie de l'induit donnant la tension aux bornes de l'induit peut donc être traité de manière très simple dans l'unité de traitement 11 pour fournir la position angulaire du second noyau magnétique 3 et de l'organe mobile en rotation dont on mesure la position angulaire.

On peut adapter le pas de bobinage de l'induit sur le circuit magnétique pour améliorer la linéarité de la mesure.

Les mesures effectuées ont montré qu'on obtient la position angulaire avec une précision supérieure à 1 %, en utilisant des composants usuels pour la réalisation du dispositif de mesure.

Dans le cas où l'on veut augmenter la sensibilité et éventuellement la précision du dispositif, il est possible d'utiliser un bobinage secondaire enroulé à la fois sur la première partie 5a du premier noyau magnétique 5 et sur la seconde partie 5b en respectant toutefois la symétrie par rapport au plan de symétrie 8 du circuit magnétique, de la disposition du bobinage secondaire 10.

En utilisant un bobinage secondaire 10 comportant deux enroulements analogue à l'enroulement représenté sur la figure 1, on double l'amplitude du signal de sortie et donc la précision de la mesure.

Le premier noyau magnétique 5 et le second noyau magnétique 3 sont réalisés en un matériau magnétique doux qui peut être par exemple un alliage fer-nickel à 80 % de nickel en poids du type Permimphy.

Le premier et le second noyaux magnétiques peuvent être réalisés à partir d'un même produit métallurgique, par exemple à partir d'un fil à section circulaire. Les deux parties 5a et 5b du premier noyau magnétique sont réalisées par cintrage du fil suivant un contour semi-circulaire ou légèrement ovale de manière à améliorer la linéarité de la mesure, et le second noyau magnétique est constitué par un simple tronçon du fil.

Dans tous les cas, le second noyau magnétique 3 qui constitue la partie mobile du dispositif de mesure solidaire de l'organe mobile en rotation dont on mesure la position est constitué par un simple élément en matériau magnétique doux et ne comporte aucun bobinage ou aucune partie constituant un aimant. De ce fait, dans le cas du dispositif de mesure suivant l'invention, aucune connexion électrique n'est à réaliser avec une pièce mobile en rotation. Il en résulte une grande simplicité de réalisation et d'utilisation du dispositif ainsi qu'une plus grande fiabilité, une plus faible usure et une plus longue durée de vie.

En outre, par rapport aux dispositifs connus de l'art antérieur dans lesquels un tore fermé devait recevoir un ou plusieurs bobinages, le dispositif suivant l'invention présente l'avantage d'une plus grande simplicité et d'un moindre coût lors de sa fabrication.

En effet, dans le cas des dispositifs comportant un noyau torique bobiné, il est nécessaire d'effectuer un bobinage de type torique, c'est-à-dire un bobinage utilisant une navette qui est chargée préalablement et qui doit être déplacée suivant une trajectoire entourant la section méridienne du tore.

Dans le cas du dispositif suivant l'invention, on peut utiliser une technique de bobinage permettant de faciliter l'opération de bobinage et d'obtenir une plus grande qualité et une plus grande régularité des enroulements. On peut en particulier réaliser le bobinage des enroulements de l'inducteur et de l'induit sur une carcasse en matière plastique dont la section est sensiblement analogue à la section des demi-anneaux constituant les deux parties du noyau du circuit magnétique annulaire.

Les bobinages réalisés de manière linéaire sur des carcasses rectilignes en matière plastique sont ensuite engagés et mis en place sur les deux parties du premier noyau magnétique qui sont ensuite disposées de manière à constituer avec les enroulements, un circuit magnétique annulaire.

Pour faciliter le montage des enroulements inducteurs, les enroulements inducteurs 7a et 7b peuvent être décalés par rapport aux entrefers situés entre les deux parties 5a et 5b du premier noyau.

L'inconvénient de cette solution est qu'on restreint la plage de fonctionnement du dispositif de mesure.

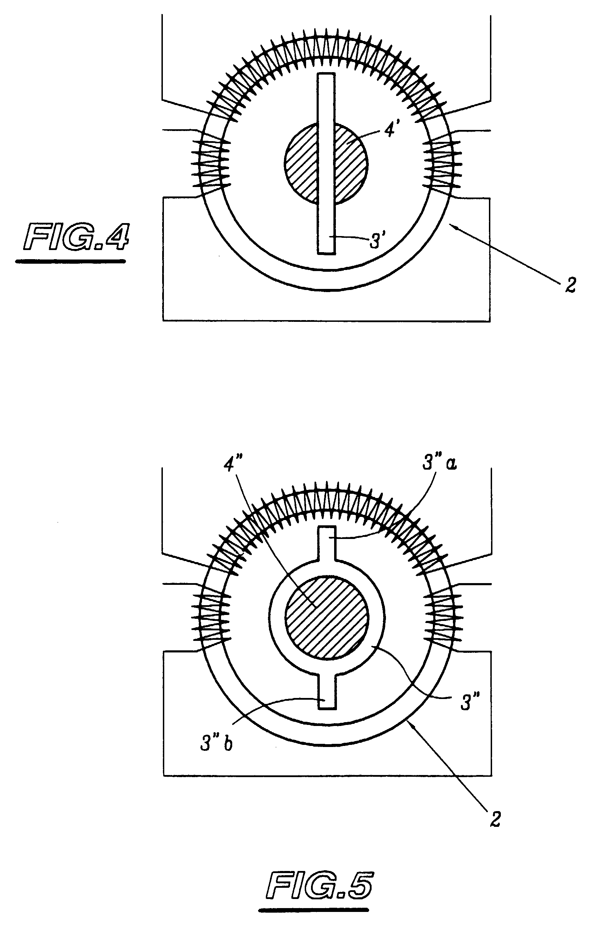

Sur les figures 4 et 5, on a représenté deux variantes de réalisation du dispositif de mesure de position angulaire qui vient d'être décrit.

Les éléments correspondants sur les figures 4 et 5 et sur la figure 1 portent les mêmes repères. Le circuit magnétique 2 est identique dans le cas du mode de réalisation représenté sur la figure 1 et dans le cas des deux variantes représentées sur les figures 4 et 5. Seule la partie mobile du dispositif de mesure constituée par le second noyau magnétique et l'axe de liaison du second noyau magnétique à l'organe mobile en rotation dont on mesure la position présente des formes de réalisation différentes dans le cas du mode de réalisation de la figure 1 et dans le cas des deux variantes.

Dans le cas de la première variante représentée sur la figure 4, le second noyau magnétique 3' est constitué par un barreau rectiligne en matériau magnétique doux qui est fixé dans une ouverture de direction diamétrale de l'axe 4' de liaison du noyau magnétique 3' à l'organe mobile en rotation.

Dans le cas de la variante représentée sur la figure 5, le second noyau magnétique 3" est constitué sous la forme d'un anneau en matériau magnétique doux comportant deux prolongements en saillie radiale vers l'extérieur 3"a et 3"b dirigés suivant une même direction diamétrale. Dans ce cas, l'axe 4" de liaison à l'organe mobile en rotation dont on mesure la position est fixé dans une disposition traversante par rapport au second noyau magnétique 3", le diamètre intérieur de la partie annulaire du noyau magnétique 3" étant sensiblement égal au diamètre de l'axe 4" qui peut être par exemple engagé en force à l'intérieur de la partie annulaire du noyau magnétique 3".

De manière générale, le second noyau magnétique peut présenter une forme différente d'une forme rectiligne ou d'une forme annulaire avec des parties en saillie radiale. Le second noyau magnétique comporte généralement au moins deux parties d'extrémité constituant des surfaces polaires qui se déplacent, pendant la rotation du second noyau magnétique, en vis-à-vis de la surface intérieure du circuit magnétique annulaire 2, avec un faible entrefer, de manière à assurer le passage du flux magnétique. De plus, le second noyau magnétique doit toujours être réalisé et disposé de manière à présenter un plan passant par l'axe de révolution du circuit magnétique annulaire comme plan de symétrie.

Dans certains cas, le second noyau magnétique peut présenter par exemple la forme d'un barreau dont la longueur est sensiblement égale au diamètre extérieur du circuit magnétique annulaire. Dans ce cas, le second noyau magnétique comporte des extrémités polaires qui se déplacent en vis-à-vis d'une surface latérale du circuit magnétique annulaire et non plus en vis-à-vis d'une surface interne.

Le courant d'alimentation du bobinage primaire est constitué de manière générale par un signal électrique variable qui peut éventuellement présenter une forme sinusoïdale. Dans ce cas, la mesure peut être réalisée sur la grandeur de crête du signal.

Le dispositif de mesure suivant l'invention peut être utilisé dans de nombreuses applications, en particulier dans le domaine de la construction automobile.

Une première application qui a été décrite plus haut concerne la mesure de la position angulaire d'un volet de charge d'un moteur à injection électronique d'un véhicule automobile.

Une seconde application concerne l'élaboration d'un signal de position d'une pédale à transmission électrique d'un véhicule automobile propulsé par un moteur électrique.

Une troisième application est relative à la mesure de la position d'un organe rotatif traduisant le mouvement linéaire d'une suspension de véhicule automobile.

## Revendications

1. Dispositif de mesure de la position angulaire d'un organe mobile en rotation, comportant un premier et un second éléments électromagnétiques (2, 3) mobiles en rotation l'un par rapport à l'autre en fonction de la rotation de l'organe mobile, le couplage électromagnétique des deux éléments (2, 3) étant variable en fonction de leur position relative et des moyens de traitement (11) d'un signal de sortie de l'un des éléments électromagnétiques (2) permettant de déterminer la position angulaire de l'organe mobile en rotation, caractérisé par le fait que le premier élément électromagnétique (2) comporte :
- un premier noyau (5) en matériau magnétique doux comprenant deux portions d'anneau (5a, 5b) ayant des extrémités placées en vis-à-vis pour constituer un circuit magnétique annulaire (2) ayant deux entrefers (6a, 6b) et un plan de symétrie (8) passant par l'axe de révolution du circuit annulaire (2),
- un bobinage primaire (7) constitué de deux enroulements (7a, 7b) entourant chacun une partie du premier noyau magnétique (5) au voisinage de l'un des entrefers (6a, 6b) et disposés symétriquement par rapport au plan de symétrie (8) du circuit magnétique (2),
- un moyen d'alimentation (9) du bobinage primaire (7) en signal électrique variable, de manière que les deux enroulements (7a, 7b) du bobinage primaire (7) soient parcourus par des courants ayant des sens de circulation opposés, et
- un bobinage secondaire (10) enroulé sur une partie au moins du premier noyau magnétique (5), de manière symétrique par rapport au plan de symétrie (8) du circuit magnétique (2), les moyens de traitement (11) du signal de sortie étant reliés aux bornes du bobinage secondaire (10), et que le second élément électromagnétique (3) est un second noyau en matériau magnétique doux ayant au moins deux extrémités polaires, monté mobile et entraîné en rotation par l'organe mobile dont on mesure la position, autour de l'axe de révolution du circuit magnétique (2), de manière que les extrémités polaires du second noyau (3) se déplacent en vis-à-vis d'une surface du circuit magnétique (2).

2. Dispositif suivant la revendication 1, caractérisé par le fait que le second noyau magnétique (3, 3', 3") est solidaire d'un axe (4, 4', 4") de liaison à l'organe mobile en rotation dont on mesure la position angulaire.

3. Dispositif suivant l'une quelconque des revendications 1 et 2, caractérisé par le fait que le second noyau magnétique (3, 3') est constitué par un barreau rectiligne.

4. Dispositif suivant la revendication 3, caractérisé par le fait que le second noyau magnétique (3') est engagé et fixé dans une ouverture de direction diamétrale d'un axe (4') de liaison du second noyau magnétique (3') et de l'organe mobile en rotation.

5. Dispositif suivant la revendication 2, caractérisé par le fait que le second noyau magnétique (3") comporte une partie annulaire dans laquelle est engagé l'axe (4") de liaison du second noyau annulaire à l'organe mobile en rotation qui présente une disposition traversante par rapport au second noyau magnétique (3").

6. Dispositif suivant l'une quelconque des revendications 1 à 5, caractérisé par le fait que le moyen d'alimentation (9) du bobinage primaire (7) est constitué par une source de courant alternatif à haute fréquence.

7. Dispositif suivant la revendication 6, caractérisé par le fait que la fréquence de la source (9) d'alimentation du bobinage primaire (7) est comprise entre 1 et plusieurs kHz.

8. Dispositif suivant l'une quelconque des revendications 1 à 7, caractérisé par le fait que le bobinage secondaire (10) comporte un premier enroulement sur une première partie (5a) du premier noyau magnétique (5) et un second enroulement sur une seconde partie (5b) du premier noyau magnétique (5).

9. Utilisation d'un dispositif de mesure suivant l'une quelconque des revendications 1 à 8, pour mesurer la position angulaire d'un volet de charge disposé dans une conduite d'admission de gaz d'un moteur à injection électronique d'un véhicule automobile.

10. Utilisation d'un dispositif de mesure suivant l'une quelconque des revendications 1 à 8, pour transmettre un signal de puissance à un moteur électrique de propulsion d'un véhicule automobile, à partir d'une pédale à transmission électrique.

11. Utilisation d'un dispositif de mesure suivant l'une quelconque des revendications 1 à 8, pour mesurer la position d'un organe mobile en rotation dont le mouvement rotatif traduit un mouvement linéaire d'une suspension d'un véhicule automobile.
